(19) Europäisches Patentamt
European Patent Office
Office européen des brevets

(11) Veröffentlichungsnummer: **0 112 528**
**B1**

(12) # EUROPÄISCHE PATENTSCHRIFT

(45) Veröffentlichungstag der Patentschrift: **20.04.88**

(51) Int. Cl.⁴: **C 08 G 73/06**

(21) Anmeldenummer: **83112382.3**

(22) Anmeldetag: **09.12.83**

(54) **Verfahren zur Herstellung von Hydantoinestern.**

(30) Priorität: **22.12.82 DE 3247350**

(43) Veröffentlichungstag der Anmeldung: **04.07.84 Patentblatt 84/27**

(45) Bekanntmachung des Hinweises auf die Patenterteilung: **20.04.88 Patentblatt 88/16**

(84) Benannte Vertragsstaaten: **AT DE FR GB IT**

(56) Entgegenhaltungen:
**EP - A - 0 002 662**
**EP - A - 0 012 379**
**EP - A - 0 079 020**
**EP - A - 0 080 079**
**DE - A - 1 906 492**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Zecher, Wilfried, Dr., Treptower Strasse 6, D-5090 Leverkusen 1 (DE)**
Erfinder: **Merten, Rudolf, Dr., Berta-von-Suttner-Strasse 55, D-5090 Leverkusen 1 (DE)**
Erfinder: **Dünwald, Willi, Dr., Geschwister-Scholl-Strasse 16, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 112 528 B1

**Beschreibung**

Die Erfindung betrifft ein Verfahren zur Herstellung von Hydantoinringe enthaltenden Polymerisaten durch Umsetzung von Acylharnstoff-Endgruppen aufweisenden Carbodiimiden mit α,β-ungesättigten Carbonsäure-Derivaten, sowie der weiteren Umsetzung der hierbei resultierenden Zwischenprodukte mit Carbonsäuren, die mindestens noch eine weitere reaktionsfähige Gruppe enthalten.

Es ist bekannt, dass man substituierte Hydantoine erhält, wenn α,β-ungesättigte Carbonsäure-Derivate mit Isocyanaten umgesetzt werden (DE-OS 2 654 112; 2 657 560; 2 750 771; 2 758 569 und 3 003 773). Eine Variante dieser Verfahren besteht darin, die Umsetzung in Gegenwart von Carbodiimidisierungs-Katalysatoren auszuführen oder die Carbodiimide in Substanz einzusetzen.

Niedermolekulare Hydantoine können im Pharmabereich und auf dem Pflanzenschutzsektor eingesetzt werden. Polyhydantoine können beispielsweise als temperaturbeständige Kunststoffe, insbesondere auf dem Elektroisoliersektor verwendet werden (z.B. FR-PS 1 484 694).

Weiterhin sind aus der EP-A 79 020, sowie 80 079 Verfahren zur Herstellung von Hydantoinringe enthaltenden Verbindungen durch Umsetzung eines Carbondiimids mit Derivaten von ungesättigten Carbonsäuren bekannt. Aus der EP-A-12 379 ist bekannt, dass Polyamidhydantoine erhalten werden können durch Umsetzung von polyfunktionellen Aminocarbonsäurederivaten in Gegenwart von Carboxylgruppen-haltigen Verbindungen. Diese Verfahren können durch die vorliegende Erfindung weiter verbessert werden.

Gegenstand der Erfindung ist ein Verfahren zur Herstellung von Hydantoinringe enthaltenden Polymerisaten, dadurch gekennzeichnet, dass

a) mit 0,5 bis 0,005 Mol Lactamen pro Val Isocyanat verkappte organische Polyisocyanate bei Temperaturen von −10 bis +200 °C, zu Carbodiimiden umgesetzt werden,

b) diese Carbodiimide pro Äquivalent mit einem Val Ester oder Amid einer α,β-ungesättigten Carbonsäure der Formel

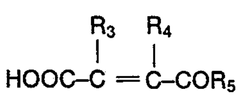 (I),

in welcher

$R^5$ für $-OR^6$ oder eine Aminogruppe

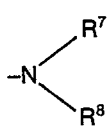

in denen

$R^6$, $R^7$ und $R^8$ unabhängig voneinander für Alkyl, Cycloalkyl, Alkenyl, Alkinyl, Aryl oder Aralkyl und $R^7$ und $R^8$ ausserdem noch für Wasserstoff stehen und

$R^3$ und $R^4$ unabhängig voneinander für Wasserstoff oder Alkyl stehen, oder Gemischen aus Phenolen oder Kresolen mit Maleinsäureanhydrid bei einer Temperatur von −20 bis 250 °C, gegebenenfalls in Gegenwart eines Katalysators zu (Poly-)-Hydantoinen umgesetzt werden, und

c) diese (Poly)-Hydantoine mit Carbonsäuren oder deren Derivaten, die mindestens noch eine weitere mit Acyl-Harnstoffen reaktionsfähige Gruppe aus der Verbindungsgruppe bestehend aus aliphatischen und aromatischen Dicarbonsäuren, α,β-ungesättigten Carbonsäurederivaten der Formel I, aliphatischen und aromatischen Polycarbonsäuren und deren Anhydriden sowie Bisglycinestern enthalten, im Verhältnis von pro Äquivalent Acylharnstoffendgruppen 1 Val Anhydrid, 1 Val Carbonsäure, 1 Val Glycinester oder 0,5 Val α,β-ungesättigter Carbonsäurederivate bei Temperaturen von 0 bis 400 °C umgesetzt werden.

Das erfindungsgemässe Verfahren stellt, insbesondere im technischen Massstab, einen erheblichen Fortschritt dar. Das Verfahren vermeidet schwer rührbare, hochviskose Zwischenstufen und Ausfällungen, durch die bis dahin das Arbeiten im grösseren Massstab kaum möglich war. Das Verfahren ermöglicht die problemlose Herstellung von solchen oligomeren Hydantoinen und von polymeren Hydantoin-Mischkondensaten, die sich in der Anwendung durch verbesserte Eigenschaften z.B. durch erhöhte Elastizität und Alterungsbeständigkeit auszeichnen.

Erfindungsgemäss können partiell mit Acylharnstoff-Gruppen substituierte Isocyanate, welche Reaktionsprodukte aus Polyisocyanaten und Lactamen sind, eingesetzt werden. Pro Val Isocyanat werden 0,5 bis 0,005, vorzugsweise 0,2 bis 0,02 Mol Lactam zur Umsetzung gebracht.

Geeignete Lactame sind beispielsweise Pyrrolidon, Dodecanlactam, vorzugsweise Caprolactam.

Als Isocyanate für die Umsetzung mit Lactamen können Polyisocyanate eingesetzt werden, wie sie z.B. in der DE-OS 3 204 129 beschrieben werden. Vorzugsweise eignen sich Polyisocyanate der allgemeinen Formel

$$R_1\ (-NCO)_z \qquad (II),$$

in denen

$R_1$ für einen, gegebenenfalls mit Halogen, Alkyl- und/oder Arylgruppen substituierten aliphatischen Rest mit 1–20 C-Atomen, einen aromatischen Rest mit 5–12 C-Atomen, einen cycloaliphatischen Rest mit 5–13 C-Atomen, einen aliphatischen-aromatischen Rest mit 6–20 C-Atomen und einem bis zu drei Heteroatome wie N, O oder S enthaltenden cyclischen Rest, der aromatisch oder aliphatisch sein kann und 5–12 Ringatome hat, steht.

Besonders bevorzugt sind aliphatische Reste mit 2–12 C-Atomen, oder ein Arylrest wie Phenyl, Tolyl, Diphenylmethan und Diphenyletherreste. z ist eine ganze Zahl von 2–4, vorzugsweise 2–3, besonders bevorzugt 2.

Bevorzugt verwendet werden technisch leicht zugängliche Gemische aus Toluylen-diisocyanaten, m-Phenylendiisocyanat, sowie phosgenierte Kondensate aus Anilin und Formaldehyd mit Polyphenylen-methylen-struktur und symmetrische

Verbindungen wie 4,4'-Diisocyanato-diphenylmethan, 4,4'-Diisocyanato-diphenylether, Naphthylen-(1,5)-diisocyanat, p-Phenylendiisocyanat, 4,4'-Diisocyanato-diphenyl-dimethylmethan, analoge hydroaromatische Diisocyanate, sowie aliphatische Diisocyanate mit 2–12 C-Atomen wie Hexamethylendiisocyanat und von Isophoron abgeleitete Diisocyanate.

Anstelle der einzelnen Isocyanate können auch deren Gemische eingesetzt werden. Weiterhin können die Polyisocyanate, z.B. zur Beeinflussung des Molekulargewichts, mit Monoisocyanaten, z.B. Methyl- oder Phenylisocyanat, in Mengen von etwa 0,1 bis 10 Mol% abgemischt werden.

Aus den genannten Acylisocyanaten werden, bevorzugt unter Verwendung von Katalysatoren, die erfindungsgemässen Carbodiimide bei Temperaturen von 0–200 °C, bevorzugt von 20 bis 90 °C, hergestellt.

Geeignete Katalysatoren sind beispielsweise Phospholine, Phospholinoxide, z.B. 3-Methyl-1-phenylphospholinoxid, Phospholinsulfide oder metallorganische Verbindungen wie Phenyllithium und Diethylzink. Besonders bevorzugt wird ein technisches Gemisch aus 1-Methyl-1-phospha-2- und 1-Methyl-1-phospha-3-cyclopenten-1-oxid (Methylphospholinoxid) als Katalysator eingesetzt.

Geeignete Derivate α,β-ungesättigter Carbonsäuren entsprechen der allgemeinen Formel I

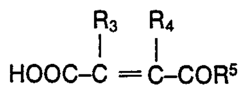 I,

worin

$-OR_6$ oder 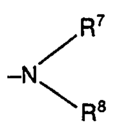

$R^3$ und $R^4$ Wasserstoff oder niederes Alkyl (bevorzugt mit 1–6 C-Atomen) und

$R^6$, $R^7$ und $R^8$ Alkyl (bevorzugt $C_1$–$C_{20}$ wie Methyl, Ethyl, iso-Propyl, Hexyl, Undecyl, Eicosyl), Cycloalkyl (bevorzugt $C_5$–$C_{10}$ wie Cyclopentyl, Cyclohexyl, Cycloheptyl, Cyclodecyl), Alkenyl (bevorzugt $C_2$–$C_{20}$ wie Allyl, Butenyl, Pentenyl, Decenyl, Eicosenyl), Alkinyl (bevorzugt $C_2$–$C_{20}$ wie Propargyl, Butinyl, Pentinyl, Hexinyl, Octinyl, Eicosinyl), Aryl (bevorzugt $C_6$–$C_{10}$ wie Phenyl und Naphthyl) und Aralkyl (bevorzugt mit 6–10 C-Atomen im Arylteil und 1–4 C-Atomen im Alkylteil wie Benzyl, Kresyl, Naphthylmethyl) und

$R^7$ und $R^8$ ausserdem noch Wasserstoff bedeuten.

Beispiele für geeignete Derivate α,β-ungesättigter Carbonsäuren werden beispielsweise in DE-OS 2 654 112, 2 657 560, 2 750 771, 2 758 569 und 3 003 773 beschrieben.

Als Derivate α,β-ungesättigter Carbonsäuren werden bevorzugt die Monoester der Maleinsäure und der Fumarsäure eingesetzt, z.B. Monoalkylester wie Methyl-, Ethyl-, Isopropyl-, Undecyl-, sowie Cyclohexyl-, Benzyl-, Allyl-, Propargyl- und Phenylmonofumarsäureester und -monomaleinsäureester.

In einer besonderen Ausführungsform des erfindungsgemässen Verfahrens können anstelle der Derivate der α,β-ungesättigten Carbonsäuren Gemische oder partiell umgesetzte Gemische aus α,β-ungesättigten cyclischen Dicarbonsäureanhydriden und aus Hydroxyverbindungen, vorzugsweise aromatischen Hydroxy-Verbindungen, (z.B. bekannt aus DE-OS 2 654 112) eingesetzt werden. Bevorzugt werden bei dieser Ausführungsform des erfindungsgemässen Verfahrens Gemische aus Maleinsäureanhydrid und beispielsweise Phenol oder o-, m- oder p-Kresolen eingesetzt.

Erfindungsgemässe Carbonsäuren oder Carbonsäure-Derivate, die mindestens noch eine mit Acyl-Harnstoffen reaktionsfähige Gruppe enthalten, sind z.B. aliphatische und aromatische Dicarbonsäuren wie Adipinsäure, Iso- und Terephthalsäure, α,β-ungesättigte Carbonsäuren, wie sie der Formel I entsprechen, aliphatische und aromatische Polycarbonsäuren und deren Anhydride wie sie in DE-OS 1 720 696 und DE-OS 2 535 335 beschrieben werden, z.B. Trimesinsäure, Trimellitsäureanhydrid, Butantetracarbonsäuredianhydrid, Pyromellitsäuredianhydrid, Benzophenontetracarbonsäuredianhydrid und 2,2-Bis-[4-(3,4-dicarboxyphenoxy)-phenyl]-propandianhydrid und Bisglycine oder deren Ester, wie sie in OE-P 1 570 552 beschrieben werden, z.B. Bis-[methoxycarbonylisopropylaminophenyl]-methan, 2,2-Bis-(ethoxycarbonylmethylamino-phenyl)-propan und 4,4'-Bis-[methoxycarbonylisopropylamino]-diphenylether. Zur Regulierung des Molekulargewichts können anteilweise, vorzugsweise im stöchiometrischen Verhältnis von 1–10 Mol%. Monocarbonsäuren wie Ameisensäure und Benzoesäure und Monoglycinester wie Phenylaminoessigsäureethylester eingesetzt werden.

Bevorzugt werden erfindungsgemäss Carbonsäuren wie Fumarsäuremonoalkylester, z.B. Fumarsäuremonoethylester, besonders bevorzugt Trimellitsäureanhydrid und Bis-[methoxy-carbonylisopropylaminophenyl]-methan oder deren Mischungen verwendet.

Die Stufe a) des erfindungsgemässen Verfahrens wird vorzugsweise bei 20–80 °C, die Stufe b) vorzugsweise bei −20 bis 180 °C und die Stufe c) vorzugsweise bei 50–200 °C durchgeführt.

Die erfindungsgemäss hergestellten in 5-Stellung substituierten Hydantoine können durch ihr IR-Spektrum (z.B. durch die charakteristischen Banden für Hydantoine und Ester) identifiziert werden. Die höhermolekularen Hydantoine weisen Lösungsviskositäten von 50–100 000 mPas, vorzugsweise von 100–10 000 mPas auf bestimmt an einer 15 Gew.-%igen Lösung in m-Kresol 70 bei 25 °C).

Die erfindungsgemässe Umsetzung kann durch Katalysatoren, wie sie beispielsweise in der DE-OS 3 003 773 genannt werden, beeinflusst werden. Als besonders günstig hat sich die Verwendung von Aminen, z.B. 1,4-Diazabicyclo-(2,2,2)-octan, Triethylamin, N,N-Bis-(dimethylaminoethyl)-methylamin, N,N-Dimethylanilin, N-Ethylmorpholin und 4-Dimethylamino-pyridin, von Lactamen wie Caprolactam und Pyrrolidon und von Phenolen wie Phenol und o-, m-, oder p-Kresol erwiesen.

Die erfindungsgemässe Reaktion kann in Lösungsmitteln, die unter den Reaktionsbedingungen nicht reagieren oder nur lockere Additionsverbindungen bilden, ausgeführt werden. Geeignete Lösungsmittel sind: (Halogen)-Kohlenwasserstoff, Phenole, Alkohole, Ester, Lactone, Lactame, Ether, Nitrile, Phosphorsäureamide, Sulfoxide und Sulfone, beispielsweise Methylenchlorid, Tetrachlorkohlenstoff, Tetrachlorethan, Trichlorethylen, Xylole, o-Dichlorbenzol, Phenol, Kresole, Benzoesäurealkylester, Phthalsäuredimethylester, Butyrolacton, Caprolacton, Acetophenon, Cyclohexanon, Benzylalkohol, Ethylenglykol, Glykolmonoethyletheracetat, Diethylenylglykolmonoethylether, Diethylenglykoldimethylether, Dimethylformamid, N-Methylpyrrolidon, Caprolactam, Benzonitril, Hexamethylphosphorsäuretriamid, Dimethylsulfoxid, Tetramethylensulfon und deren Gemische.

Bevorzugt wird für die Umsetzung des Polycarbodiimids Methylenchlorid als Lösungsmittel verwendet. Eine bevorzugte Ausführungsform besteht darin, das Carbodiimid z.B. in Toluol herzustellen und dann das Methylenchlorid vor der Umsetzung mit den α,β-ungesättigten Carbonsäuren hinzuzufügen. Die weitere Kondensation kann dann nach Zugabe höhersiedender Lösungsmittel wie z.B. Phenol, technischer Kresol-Gemische, Dimethylformamid und N-Methylpyrrolidon, gegebenenfalls unter Abdestillieren des Methylenchlorids und der anderen leichtflüchtigen Lösungsmittel-Komponenten, ausgeführt werden.

Es kann vorteilhaft sein, die Addition der α,β-ungesättigten Carbonsäuren an das Carbodiimid in Gegenwart von aromatischen Hydroxy-Verbindungen wie Phenol, aliphatischen Hydroxy-Verbindungen wie Methanol oder Lactamen wie Caprolactam und Pyrrolidon auszuführen. Der Reaktionsverlauf kann IR-spektroskopisch verfolgt werden.

Bei der bevorzugten Ausführungsform wird zuerst das partiell durch die Addition von Lactamen an Isocyanate gebildete substituierte Isocyanat zum Carbodiimid umgesetzt. Dann wird die Addition der α,β-ungesättigten Carbonsäure an dieses Carbodiimid durchgeführt und anschliessend oder gleichzeitig wird nach Zugabe der substituierten, mit Acylharnstoffen reaktionsfähigen Carbonsäure auskondensiert.

Eine weitere Ausführungsform besteht darin, für die Herstellung acylierter Carbodiimide Gemische aus Isocyanaten und Lactamen oder Gemische aus partiell carbodiimidisierten Isocyanaten und Lactamen einzusetzen.

Pro Mol Isocyanat werden 0,5–0,005 Mol Lactam, pro Val Carbodiimid ein Val des α,β-ungesättigten Carbonsäure-Derivats und pro Val des Acylharnstoffs ein Val der substituierten Carbonsäuren, bezogen auf die reaktionsfähigen Gruppen, eingesetzt.

Die erfindungsgemässen Polymeren zeichnen sich durch besondere Temperaturbeständigkeit, Elastizität und Abriebfestigkeit aus und sind z.B. geeignet zur Herstellung von Lacken, Drahtlakken, Folien und Formkörper. Ihre Eigenschaften können für die verschiedenen Einsatzgebiete durch Zusatz von Füllstoffen, Pigmenten und nieder- und hochmolekularen Komponenten, z.B. zur Herstellung von Lacken und Folien durch Abmischen und Polyestern, Polycarbamidestern und Polyamidimiden, in weiten Grenzen variiert werden, (siehe z.B. DE-OS 2 654 112).

Beispiel 1

In 1360 g Toluol werden 1000 g 4,4'-Diisocyanatodiphenylmethan und 45,2 g Caprolactam 15 Minuten auf 100 °C erhitzt. Anschliessend wird auf 40 °C abgekühlt und 4 g Methylphospholinoxid (techn. Gemisch aus 1-Methyl-1-phospha-2-und 1-Methyl-1-phospha-3-cyclopenten-1-oxid) zugegeben. Die Carbodiimid-Bildung erfolgt unter Abspaltung von $CO_2$. Die Temperatur wird nach Massgabe der Gasentwicklung auf 50 °C gesteigert und dort gehalten, bis kein $CO_2$ mehr entweicht. Dann werden 1360 g Methylenchlorid zugegeben. Man erhält eine stabile Lösung des variierten Polycarbodiimids (diese zeigt die für Carbodiimide charakteristischen JR-Bande bei 2150 $cm^{-1}$). Anschliessend wird auf 40 °C gekühlt und bei dieser Temperatur 200 g Phenol und danach anteilweise unter Kühlung 496 g Maleinsäuremonomethylester eingetragen. Es wird eine stabile Lösung eines mit Acylharnstoff-Endgruppen substituierten Polyhydantoinester erhalten. Die Lösung wird mit 1480 g einer Mischung aus gleichen Teilen Phenol und eines technischen Kresol-Gemisches versetzt. Dann wird die Temperatur im Verlaufe von etwa 6 Stunden auf 180 °C gesteigert, wobei Methylenchlorid und auch Toluol abdestillieren. Bei 90 °C wird unterbrochen und 38,4 g Trimellitsäureanhydrid zugegeben. Sobald nach weiterem Aufheizen 180 °C erreicht sind, werden 1480 g Phenol/Kresol eingetragen und nach 4 Stunden bei dieser Temperatur nachgerührt. Man erhält eine 33%ige Lösung des variierten Polyhydantoinesters (Viskosität$^{25}$ = 13 900 mPas, im IR-Spektrum die für Hydantoine charakteristischen Banden bei 1715 und 1775 $cm^{-1}$).

Beispiel 2

Entsprechend Beispiel 1 und in den dort angegebenen Mengenverhältnissen wird eine Lösung des Polyhydantoinesters in Toluol/Methylenchlorid/Phenol hergestellt. Dann wird mit 1200 g Phenol/Kresol verdünnt, die Temperatur auf 60 °C gesteigert und bei dieser Temperatur 79,6 g Bis-[methoxycarbonyl-isopropyl-amino-phenyl-(4)-]-methan eingetragen. Anschliessend wird nochmals mit 1400 g Phenol/Kresol verdünnt und die Temperatur im Verlaufe von ca. 5 Stunden auf 180 °C gesteigert. Methylenchlorid und Toluol destillieren ab. Das Abdestillieren der Lösungsmittel kann bei leichtem Vakuum durchgeführt werden. Nach 4 Stunden bei 180 °C erhält man eine klare Lösung des Polyhydantoins (Viskosität$^{25}$ =

51 600 mPas, im JR-Spektrum Banden bei 1715 und 1780 $cm^{-1}$).

Beispiel 3

Entsprechend Beispiel 1 wird in den dort angegebenen Mengenverhältnissen eine Lösung des Polyhydantoinmethylesters in Toluol/Methylenchlorid/Phenol hergestellt. Dann werden 1100 g Phenol/Kresol (1:1) zugegeben, auf 100 °C aufgeheizt und 28,8 g Fumarsäuremonoethylester eingetragen. Die Temperatur wird nun auf 180 °C im Verlaufe von ca. 4 Stunden gesteigert, wobei restliches Methylenchlorid und Toluol abdestillieren. Dann wird mit 1350 g Phenol/Kresol verdünnt und noch 6 Stunden bei 180 °C nachgerührt. Der Polyhydantoinester wird als 33%ige klare braune Lösung erhalten. Die Viskosität $\eta^{25}$ beträgt 38 400 mPas.

Eine Probe der Hydantoinlösung wird auf ein Prüfblech aufgestrichen und in jeweils 15 Minuten bei 200 und 300 °C zu einem klaren elastischen Lackfilm eingebrannt.

Beispiel 4

In 1000 g Toluol werden 500 g 4,4′-Diisocyanatodiphenylmethan und 45,2 g Caprolactam 15 Minuten auf 100 °C erhitzt. Dann wird auf 40 °C abgekühlt, 2 g Methylphospholinoxid zugegeben und zuerst bei 40 °C und dann bei 50 °C die Carbodiimidbildung durchgeführt. Anschliessend werden 564 g Phenol und bei 50–55 °C anteilweise 176 g Maleinsäureanhydrid eingetragen. Die Reaktion verläuft schwach exotherm. Man erhält eine viskose, aber noch gut rührbare Lösung des variierten Polyhydantoin-phenylesters (JR-Banden bei 1705 und 1755 $cm^{-1}$). Nun werden 480 g Phenol und 79,6 g Bis-[methoxy-carbonyl-isopropyl-amino-phenyl-(4)-]-methan zugegeben und die Temperatur bei gleichzeitigem Abdestillieren von Methylenchlorid und Toluol auf 180 °C gesteigert. Dann wird mit 1040 g Phenol/Kresol (1:1) verdünnt und 4 Stunden bei 180 °C nachgerührt. Der Polyhydantoinphenylester wird als klare Lösung mit einem Festgehalt von 33 Gew.-% erhalten, (Viskosität $\eta^{25}$ von 31 800 mPas, charakteristische Banden im JR-Spektrum bei 1705 und 1755 $cm^{-1}$).

Beispiel 5

In 400 g Toluol werden 174 g eines technischen Gemisches auf 80% 2,4- und 20% 2,6-Toluylendiisocyanat mit 11,3 g Caprolactam bei 100 °C zum Acylharnstoff und nach Zugabe von 1 g Methylphospholinoxid bei 50° zum Polycarbodiimid umgesetzt. Dann werden 340 g Methylenchlorid und 50 g Phenol zugegeben und unter Kühlung 123,5 g (0,95 Mol) Maleinsäuremonomethylester zugetropft. Danach wird der Ansatz mit 200 g Phenol/Kresol versetzt, die Temperatur auf 70 °C gesteigert und 9,6 g Trimellitsäureanhydrid eingetragen. Die Temperatur wird nun weiter auf 180 °C gesteigert und anschliessend wird mit 265 g Phenol/Kresol verdünnt und der Ansatz noch 5 Stunden bei 180 °C gerührt. Man erhält eine Lösung des Polyhydantoinesters mit einem Festgehalt von 33 Gew.-% (Viskosität $\eta^{25}$ = 6200 mPas, JR-Banden bei 1720 und 1775 $cm^{-1}$).

Eine Probe der Hydantoinlösung wird auf einer Glasplatte bei 200 und 300 °C zu einem klaren harten Lackfilm eingebrannt.

Eine weitere Probe wird im Verhältnis 1:1, bezogen auf den Festgehalt, mit einem Polyester aus Terephthalsäure, Glycerin und Ethylenglykol abgemischt, mit 1 Gew.-% Titantetrabutylat versetzt und auf einem Prüfblech bei 200 und 300 °C zu einem klaren elastischen Lackfilm eingebrannt.

Beispiel 6

250 g 4,4-Diisocyanato-diphenylmethan werden in 340 g Toluol mit 11,3 g Caprolactam in 15 Minuten bei 100 °C partiell zum Acylharnstoff umgesetzt. Dann werden 340 g Methylenchlorid und 1,5 g Methylphospholinoxid zugegeben und bei 40–50 °C in ca. 4 Stunden das Polycarbodiimid hergestellt. Nach Zugabe von 50 g Phenol werden bei 40 °C, unter Kühlung 130 g Maleinsäuremonomethylester zugetropft. Dann wird mit 285 g Phenol/Kresol verdünnt, die Temperatur bei gleichzeitigem Abdestillieren von Methylenchlorid und Toluol auf 180 °C gesteigert und nochmals 335 g Phenol/Kresol zugegeben. Anschliessend wird noch 4 Stunden bei 180 °C nachgerührt. Man erhält den Polyhydantoinmethylester als 33%ige klare braune Lösung (Viskosität $\eta^{25}$ = 54 000 mPas).

Eine Probe dieser Lösung wird auf ein Prüfblech aufgestrichen und in jeweils 15 Minuten bei 200 und 300 °C zu einem klaren elastischen Lackfilm eingebrannt.

Beispiel 7

In 350 g Toluol werden 250 g 4,4′-Diisocyanatodiphenylmethan mit 11,3 g Caprolactam 0,5 Stunden auf 90 °C erhitzt und mit 1 g Methylphospholinoxid als Katalysator bei 40 bis 50 °C zum Polycarbodiimid umgesetzt. Dann wird mit 340 g Methylenchlorid und 50 g Phenol verdünnt und bei 40 °C unter Kühlung 123,5 g Maleinsäuremethylester zugetropft. Man erhält eine stabile Lösung des substituierten Polyhydantoins (Banden im IR-Spektrum bei 1715 und 1775 $cm^{-1}$, die auch nach 17-stündigem Stehenlassen der Lösung bei Raumtemperatur noch unverändert sind). Nach Hinzufügen von 290 g Phenol/Kresol wird aufgeheizt, bei 60 °C 4,8 g Trimellitsäureanhydrid und 10,0 g Bis-[methoxy-carbonyl-isopropyl-amino-phenyl-(4)-]-methan eingetragen und die Temperatur bei gleichzeitigem Abdestillieren des Methylenchlorids und Toluols auf 180 °C gesteigert. Dann wird mit 345 g Phenol/Kresol verdünnt und noch 4 Stunden bei 180 gerührt. Man erhält eine klare Lösung des Polyhydantoinesters mit einer Viskosität $\eta^{25}$ = 45 600 mPas.

Beispiel 8

In 400 g Toluol werden 250 g 4,4′-Diisocyanatodiphenylmethan und 11,3 g Caprolactam bei 100 °C zum Acylharnstoff und nach Zugabe von 1 g Methylphospholinoxid als Katalysator, bei 40–50 °C zum Polycarbodiimid umgesetzt. Dann wird mit 700 g N-Methylpyrrolidon verdünnt und

bei 40–45 °C 137 g Fumarsäuremonoethylester anteilweise unter Kühlung eingetragen. Anschliessend wird die Temperatur auf 80 °C gesteigert, 9,6 g Trimellitsäureanhydrid zugegeben und 2 Stunden bei 80 °C gerührt. Danach wird das Toluol bei 80 °C im Vakuum abdestilliert und das Reaktionsgemisch 4 Stunden bei 120 °C und 2 Stunden bei 130 °C gerührt. Man erhält eine hellbraune Lösung des Polyhydantoinethylesters mit einem Festgehalt von 33 Gew.-% (Viskosität $\eta^{25}$ = 4100 mPas, JR-Banden bei 1720 und 1775 $cm^{-1}$).

Eine Probe der Hydantoinlösung wird auf eine Glasplatte aufgestrichen und in jeweils 15 Minuten bei 200 und 300 °C zu einem klaren elastischen Lackfilm eingebrannt.

Anwendungsbeispiele

zu Beispiel 1

Die Lacklösung wird mit Kresol/Xylol (2:8) auf einen Festgehalt von 27% verdünnt und in einem Vertikalofen von 4 m Länge bei einer Ofentemperatur von 400 °C auf einen Cu-Draht von 0,7 mm Durchmesser bis zu einer Durchmesserzunahme von 40–50 µm appliziert. Man erhält in einem weiten Fahrbereich einen Cu-Lackdraht mit ausgezeichneten mechanischen Werten. Bei einer Lackiergeschwindigkeit von 16 m/Min. beträgt die maximale Aussenfaserdehnung 88%, der Hitzeschock 260 °C, die Erweichungstemperatur 352 °C (DIN 46453–10.2) und die Schabefähigkeit 41 Hübe.

zu Beispiel 2

Die Lacklösung wird mit Kresol/Xylol (2:8) auf einen Festgehalt von 25% verdünnt. Ein entsprechend Beispiel 1) lackierter Cu-Draht von 0,7 mm Durchmesser hat bei einer Lackierungsgeschwindigkeit von 14 m/Min. eine max. Aussenfaserdehnung von 88%, einen Hitzeschock von 260 °C, eine Erweichungstemperatur von 414 °C und eine Schabefestigkeit von 84 Hüben.

zu Beispiel 4

Eine Probe dieser Hydantoin-Lösung wird mit Kresol/Xylol (2:8) auf einen Festgehalt von 25% verdünnt. Die entsprechend Beispiel 1) durchgeführte Lackierung ergibt bei einer Lackiergeschwindigkeit von 14 m/Min. einen isolierten Cu-Draht von 0,7 mm Durchmesser mit einer Elastizität von 88%, einem Hitzeschock von 260 °C, einer Schabefestigkeit von 84 Hüben und einer Erweichungstemperatur von 414 °C.

zu Beispiel 7

Die so hergestellte Hydantoin-Lösung wird mit Kresol/Xylol auf einen Festgehalt von 25% verdünnt. Die Lackierung entsprechend Beispiel 1 bei 400 °C und einer Lackiergeschwindigkeit von 18 m/Min. ergibt auf einem Cu-Draht von 0,7 mm Durchmesser eine Elastizität von 88%, einen Hitzeschock von 260 °C, eine Schabefestigkeit von 58 Hüben und eine Erweichungstemperatur von 407 °C.

**Patentansprüche**

1. Verfahren zur Herstellung von Hydantoinringe enthaltenden Polymerisaten, dadurch gekennzeichnet, dass

a) mit 0,5 bis 0,005 Mol Lactamen pro Val Isocyanat verkappte organische Polyisocyanate bei Temperaturen von −10 bis +200 °C, zu Carbodiimiden umgesetzt werden,

b) diese Carbodiimide pro Äquivalent mit einem Val Ester oder Amid einer α,β-ungesättigten Carbonsäure der Formel

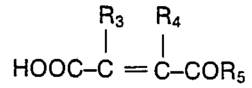

(I),

in welcher

$R^5$ für $-OR^6$ oder eine Aminogruppe

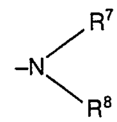

in denen

$R^6$, $R^7$ und $R^8$ unabhängig voneinander für Alkyl, Cycloalkyl, Alkenyl, Alkinyl, Aryl oder Aralkyl und $R^7$ und $R^8$ ausserdem noch für Wasserstoff stehen und

$R^3$ und $R^4$ unabhängig voneinander für Wasserstoff oder Alkyl stehen, oder Gemischen aus Phenolen oder Kresolen mit Maleinsäureanhydrid bei einer Temperatur von −20 bis 250 °C, gegebenenfalls in Gegenwart eines Katalysators zu (Poly-)-Hydantoinen umgesetzt werden, und

c) diese (Poly)-Hydantoine mit Carbonsäuren oder deren Derivaten, die mindestens noch eine weitere mit Acyl-Harnstoffen reaktionsfähige Gruppe aus der Verbindungsgruppe bestehend aus aliphatischen und aromatischen Dicarbonsäuren, α,β-ungesättigten Carbonsäurederivaten der Formel I, aliphatischen und aromatischen Polycarbonsäuren und deren Anhydriden sowie Bisglycinestern enthalten, im Verhältnis von pro Äquivalent Acylharnstoffendgruppen 1 Val Anhydrid, 1 Val Carbonsäure, 1 Val Glycinester oder 0,5 Val α,β-ungesättigter Carbonsäurederivate bei Temperaturen von 0 bis 400 °C umgesetzt werden.

2. Verfahren nach Anspruch 1, dadurch gekennzeichnet, dass als mit einer weiteren funktionellen Gruppe substituierte Carbonsäuren Fumarsäuremonoalkylester verwendet werden.

3. Verfahren nach Anspruch 1, dadurch gekennzeichnet, dass als substituierte Carbonsäuren Tri- oder Tetracarbonsäuren oder deren Anhydride verwendet werden.

4. Verfahren nach Anspruch 1, dadurch gekennzeichnet, dass als substituierte Carbonsäure Trimellitsäureanhydrid verwendet wird.

5. Verfahren nach Anspruch 1, dadurch gekennzeichnet, dass als substituierte Carbonsäuren Bisglycinester verwendet werden.

**Claims**

1. Process for the preparation of polymers containing hydantoin rings, characterised in that

a) organic polyisocyanates masked with from 0.5 to 0.005 mol of lactams per val of isocyanate are converted into carbodiimides at temperatures from $-10\,°C$ to $200\,°C$,

b) these carbodiimides are reacted with one val per equivalent thereof of an ester or amide of an α,β-unsaturated carboxylic acid corresponding to the following formula:

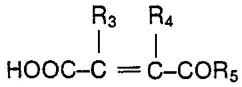

(I)

wherein

$R^5$ denotes $-OR^6$ or an amino group

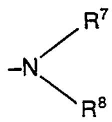

wherein

$R^6$, $R^7$ and $R^8$ denote, independently of one another, alkyl, cycloalkyl alkenyl, alkinyl, aryl or aralkyl and $R^7$ and $R^8$ may also stand for hydrogen, and

$R^3$ and $R^4$ denote, independently of one another, hydrogen or alkyl, or mixtures of phenols or cresols with maleic acid anhydride at a temperature from $-20$ to $250\,°C$, optionally in the presence of a catalyst, for form (poly)-hydantoins, and

c) these (poly)-hydantoins are reacted at temperatures from 0 to 400 °C with carboxylic acids or derivatives thereof with contain at least one other group which is reactive with acyl ureas, selected from the group of compounds consisting of aliphatic and aromatic dicarboxylic acids, α,β-unsaturated carboxylic acid derivatives corresponding to formula I, aliphatic and aromatic polycarboxylic acids and their anhydrides and bisglycine esters, the reaction being carried out in a ratio of 1 val of anhydride, 1 val of carboxylic acid, 1 val of glycine ester or 0,5 val of α,β-unsaturated carboxylic acid derivative per equivalent of acyl urea end groups.

2. Process according to claim 1, characterised in that the carboxylic acids used which are substituted with a further functional group are fumaric acid monoalkyl esters.

3. Process according to claim 1, characterised in that the substituted carboxylic acids used are tri- or tetra-carboxylic acids or their anhydrides.

4. Process according to claim 1, characterised in that the substituted carboxylic acid used is trimellitic acid anhydride.

5. Process according to claim 1, characterised in that the substituted carboxylic acids used are bis-glycine esters.

**Revendications**

1. Procédé de production de polymérisats contenant des noyaux d'hydantoïne, caractérisé en ce que

a) on fait réagir des polyisocyanates organiques coiffés avec 0,5 à 0,005 mole de lactames par valence d'isocyanate à des températures de $-10$ à $+200\,°C$ pour former des carbodiimides,

b) on fait réagir ces carbodiimides, par équivalent, avec une valence d'ester ou d'amide d'un acide carboxylique à non-saturation α,β, de formule

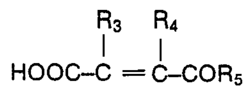

(I)

dans laquelle

$R^5$ est un groupe $-OR^6$ ou un groupe amino

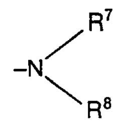

dans lesquels

$R^6$, $R^7$ et $R^8$ représentent indépendamment les uns des autres un groupe alkyle, cycloalkyle, alcényle, alcynyle, aryle ou aralkyle et $R^7$ et $R^8$ représentent en outre l'hydrogène et

$R^3$ et $R^4$ représentent indépendamment l'un de l'autre l'hydrogène ou un groupe alkyle ou des mélanges de phénols ou de crésols avec l'anhydride d'acide maléique à une température de $-20$ à 250 °C, éventuellement en présence d'un catalyseur pour former des (poly)-hydantoïnes, et

c) on fait réagir ces (poly)-hydantoïnes avec des acides carboxyliques ou des dérivés de ces acides qui contiennent au moins encore un autre groupe apte à réagir avec des acylurées, du groupe des composés comprenant des acides dicarboxyliques aliphatiques et aromatiques, des dérivés d'acides carboxyliques à non-saturation α,β, de formule I, des acides polycarboxyliques aliphatiques et aromatiques et leurs anhydrides ainsi que des esters de bisglycine, dans une proportion, par équivalent de groupes acylurée terminaux, d'une valence d'anhydride, d'une valence d'acide carboxylique, d'une valence d'ester de glycine et de 0,5 valence de dérivés d'acides carboxyliques à non-saturation α,β, à des températures de 0 à 400 °C.

2. Procédé suivant la revendication 1, caractérisé en ce qu'on utilise des esters monoalkyliques d'acide fumarique comme acides carboxyliques substitués avec un autre groupe fonctionnel.

3. Procédé suivant la revendication 1, caractérisé en ce qu'on utilise des acides tricarboxyliques ou tétracarboxyliques ou leurs anhydrides comme acides carboxyliques substitués.

4. Procédé suivant la revendication 1, caractérisé en ce qu'on utilise l'anhydride d'acide trimellitique comme acide carboxylique substitué.

5. Procédé suivant la revendication 1, caractérisé en ce qu'on utilise des esters de bisglycine comme acides carboxyliques substitués.